# EUROPEAN PATENT SPECIFICATION

(11) **EP 2 613 965 B1**
(45) Date of publication and mention of the grant of the patent: **11.03.2015**
(21) Application number: 11770571.5
(22) Date of filing: 09.09.2011
(51) Int. Cl.: B60N 2/28, B60N 2/42, B60N 2/427

(54) **ROTATING CHILD SAFETY SEAT**
DREHENDER KINDERSICHERHEITSSITZ
SIÈGE DE SÉCURITÉ PIVOTANT POUR ENFANT

(30) Priority: 10.09.2010 NO 20101270
(43) Date of publication of application: 17.07.2013
(73) Proprietor: HTS Hans Torgersen & Sønn AS, 3535 Krøderen (NO)
(72) Inventor: VAN DER VEER, Erik, NL-3533 AD Utrecht (NL); VAN MOURIK, Okke, NL-3514 BS Utrecht (NL); VAN HOUTERT, Rob, NL-6581 ES Malden (NL)
(74) Representative: Onsagers AS
(86) International application number: PCT/NO2011/000243
(87) International publication number: WO 2012/033414

(56) References cited:
- EP-A1- 1 391 345
- WO-A1-2009/004353
- FR-A1- 2 645 477
- FR-A1- 2 848 157
- GB-A- 2 424 362

## Description

The present invention concerns a child safety seat in accordance with the introductory part of the independent claim 1. Such a seat is known from document FR 2 848 157 A1.

The present invention concerns a child safety seat for use in a passenger seat of a vehicle, which child safety seat is fastened to the passenger seat by attachment means such as a safety seat belt such as a three-point safety belt or standard anchorage units (so-called Isofix connectors). More particularly the present invention concerns an arrangement to rotate the child safety seat during a collision, where the arrangement will significantly reduce the risk of injury to a child in the event of a collision with the vehicle.

Child safety seats are used to secure children in motor vehicles such as automobiles, trucks and busses, in order to protect the child from injury in the event of an accident. The child safety seats are then designed to be fitted into the vehicle seat and secured to the vehicle seat by using a vehicle's adult lap and diagonal belt part of the vehicle seat belt, or sometimes just the lap belt part of the vehicle seat belt. Furthermore, the child safety seats are often padded with different energy absorbing materials, which will reduce the forces a child is exposed to during a collision (i.e. a side impact crash), for instance when head or other parts of the child "hits" the child safety seat, as these forces may be very high. However, vehicle seats, vehicle seat belts, anchorage points etc. vary greatly between different models of vehicles, which may result in that a child safety seat is not fitted correctly into the vehicle seat.

Based on the above mentioned compatibility problems, a need has arisen a need for a standard system for fitting a child safety seat into a vehicle seat. In an attempt to standardize the securing of a child safety seat to a seat assembly in a vehicle, seat assemblies have been modified to accomplish this means. In particular, anchorage points in the form of loop fasteners are secured to a frame of the seat assembly, between the seat cushion and the seat back. These loop fasteners are commonly referred to as an Isofix fixture. A latch mechanism in the form of latches or clips extending out from the bottom of the child safety seat engages the loop fasteners to provide a positive attachment of the child safety seat to the seat assembly.

Isofix fixtures will, compared with ordinary vehicle seat belts, provide an easier and correct fitting of the child safety seat into the vehicle seat and will also provide a better protection in the event of a frontal and/or rear collision with the vehicle. However, in the event of a side collision with the vehicle, a child safety seat that is fitted with the Isofix system, will try to rotate around the Isofix anchorage points, whereby the head and body of the child, following the rotation, can roll out of the child safety seat and hit the interior of the vehicle (door etc.). Especially is this cru cial for the child's head, as the head is relatively heavy compared to the rest of the body.

FR 2.848.157 A1 discloses a child safety seat, where the child safety seat has a curved back with channels for guide rails on a base plate. The seat is tensioned by a belt and pulley system while being held in the upright position by a shearing pin through the base. In the event of a front or rear impact the pin shears and the belt, actuated by a pyrotechnic device, tilts the seat into a safe position with the baby's back towards the direction of travel. A second pyrotechnic device and pulley system rotates the seat before tilting it in the event of a side impact.

EP 1.391.345 A1 discloses a kinetic child restraint device, child restraint device comprises a seat to contain and support a child, a bracket pivotally connected to said seat on at least one side thereof so as to provide pivotal movement of said seat with respect to said bracket about a first axis lying in a first plane; and a pivotal mounting connection adapted to pivotally connect sais bracket to a vehicle support for rotation about a second axis, said second axis lying in a second plane which intersects said first plane, whereby said seat is simultaneously pivotable about said first and second axes.

FR 2.645.477 A1 discloses a removable seat in vehicle preventing, in the event of an accident, the head of the child sitting in this seat from being thrown forward or backward, where the seat is arranged perpendicularly to the axis of the vehicle.

The object of the present invention is to provide a solution which improves crash behaviour of the child safety seat and which offers an easy installation of the child safety seat in the vehicle, at the same time as minimizing the risk for misuse.

This object is obtained by an inventive concept of the child safety seat as defined in the characterizing part of the independent claim. Further embodiments of the invention are defined in the dependent claims.

In the following, the expression "forward-facing" refers to the forward driving direction of the vehicle. Using the forward driving direction of the vehicle as a reference, the terms rearward facing, upward and downward correspond to the ordinary terms when defining directions in a vehicle.

According to the present invention the child safety seat preferably comprises a head section, a back section and a sitting section. However, it is to be understood that the child safety seat may be comprised of fewer or more sections. Furthermore, the child safety seat is connected to a base frame, where the base frame has a lower surface resting on a sitting portion of a passenger's seat when the child safety seat is arranged in the passenger's seat. The child safety seat may be releasable or permanently connected to the base frame. The base frame is provided for engagement with anchorage means in the passenger's seat. This engagement provides preferably a pivot connection between the base frame and the anchorage means.

In order to allow rotation of the child safety seat during a sideways collision, the base frame is connected to the sitting section of the child safety seat through a pivot connection or the like. The pivot connection will provide a fixed connection between the base frame and the sitting section under normal utilization or use of the child safety seat (i.e. the child safety seat is not able to move relative to the base frame, either in height and/or sideways direction), but the pivot connection will allow the child safety seat to rotate around an axis extending through the pivot connection in the event of a sideways collision.

The pivot connection may for instance be arranged over a common surface of the base frame and the sitting section.

The base frame may be manufactured from a solid or hollow plate element, or it may be made from a plurality of beams that are connected to each other to form the base frame. The beams may be connected to each other by welding, fastening means or the like. The base frame may also be comprised of both a plate element and a plurality of beams, the plate element and the beams being connected to each other to form the base frame. The plate element then will rest on the passenger's seat when the child safety seat is arranged in the vehicle.

The plate element may, on a side resting on the passenger's seat, comprise a sheet of material that will provide friction between the plate element and the passenger's seat and/or a sheet material that will protect the passenger's seat The base frame has preferably a triangular form, but is should be understood that the base frame could be manufactured in any other suitable form, for instance square-shaped, rectangular, circular or semi-circular or a combination of straight and arced surfaces.

Preferably a side (back side) of the base frame that will lie adjacent to the passenger's seat will have a straight surface, as this will enable that the child safety seat to be placed as far back as possible against the back of the passenger's seat, thereby also being supported by the back of the passenger's seat. This side will also be provided with at least one anchorage means, for instance an Isofix connector, such that the base frame can be connected to corresponding anchorage means arranged in the passenger's seat. Two Isofix connectors are preferably arranged on the base frame, where the Isofix connectors are then arranged towards each end of the straight surface. This arrangement will stabilize the base frame during a sideways collision.

The pivot connection between the base frame and the sitting section of the child safety seat may for instance be arranged in front of the base frame. The pivot connection may be constituted of a bolt, a screw, a pin, a shaft or the like and corresponding locking means, where the pivot connection will allow the child safety seat to rotate around an axis extending through the pivot connection, relative to the base frame, under certain conditions.

The sitting section of the child safety seat and the base frame will then be provided with corresponding fastening point for the pivot connection. If for instance a bolt is used as the pivot connection, the base frame may be provided with an aperture, through which aperture the bolt is inserted. The sitting section of the child safety seat is then provided with an aperture for a nut. The sitting section of the child safety seat and the base frame can then be connected to each other through the connection of the bolt and nut.

It should of course be understood that the sitting section may be provided with the aperture for the bolt, while the base frame then will be provided with the aperture for the nut.

As it is not desirable that the child safety seat rotates around the axis extending through the pivot connection all the time, the child safety seat includes means which will provide the fixed connection between the sitting section of the child safety seat and the base frame under normal utilization or use of the child safety seat, but allow the child safety seat to rotate relative to the base frame under certain conditions when collision forces during a sideways collision exceed a certain critical predetermined value. This means may for instance be at least one shear pin connected to and arranged between the sitting section of the child safety seat and the base frame.

This means may also be a sacrificial element which can be "crushed", broken or compressed. Furthermore, a spring element may also be used. These elements may then also act as energy absorbing means, thereby limiting the rotation of the child safety seat around the axis extending through the pivot connection.

The energy absorbing means may also be comprised of a sacrificial sheet of material and a corresponding element provided with at least one cutting edge, such that the element with the at least one cutting edge will remove material from the sacrificial sheet. The sacrificial sheet of material may then be arranged on the base frame (or vice versa) and the element with the cutting edge on the sitting section of the child safety seat or vice versa).

In a preferred embodiment of the present invention the child safety seat comprises two Isofix connectors, where the Isofix connectors are fixed in a suitable way to the base frame. However, it is also possible to arrange the Isofix connectors to be adjustable (i.e. extendable and retractable) within the base frame.

One end of the Isofix connector comprises a latch or a clip that will engage with anchorage points in the vehicle seat. As these latches and anchorage points are used as standards, a skilled person will know how these are designed, and will therefore not be described further in the description.

A child safety seat according to the present invention will preferably be placed in the vehicle facing in the forward driving direction of the vehicle. However, the invention as described in this application may also apply to child safety seats for other groups of children, thus the safety seat may also be placed facing rearward. For this reason the child safety seat may be provided with belt guide units and fastening means for the vehicle seat belt.

In order to minimize the movement of a child arranged in the child safety seat during a collision, the head section and/or the back section of the child safety seat are provided with protective wings. The protective wings will then prevent a part of the child, for instance the head of the child, from "rolling" out of the child safety seat during a collision. Furthermore, the protective wings may be padded with energy absorbing material over at least a part of their surface.

The foregoing and other features of the present invention will become apparent to one skilled in the art to which the present invention relates upon consideration of the following description of the invention with reference to the accompanying drawings, wherein:
Figure 1 show a child safety seat according to a first embodiment of the present invention, where the child safety seat is arranged in a forward-facing position in a seat assembly of a vehicle,
Figure 2 shows the child safety seat in figure 1 (from above) under a normal utilization of the child safety seat, i.e. under driving (left side), and how the child safety seat will behave during a side collision (right side),
Figure 3 shows another embodiment of the child safety seat according to the present invention, and
Figure 4 shows the child safety seat in figure 3 (from above) under a normal utilization of the child safety seat, i.e. under driving (left side) and how the child safety seat will behave during a side collision (right side).

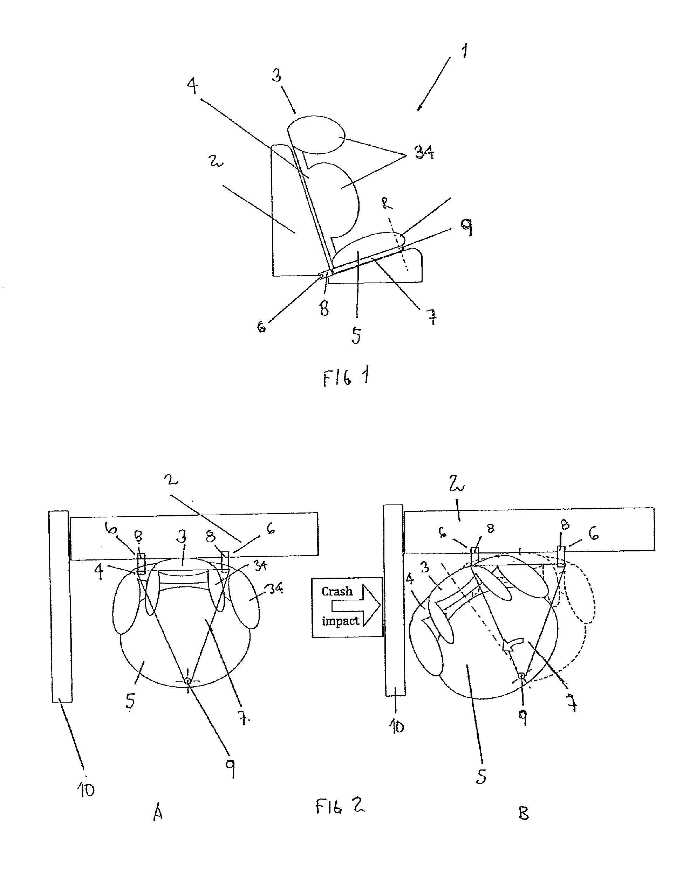

Figure 1 shows a first embodiment of a child safety seat 1 according to the present invention, where the child safety seat 1 is arranged in a forward-facing position in a seat assembly 2 of a vehicle (not shown). The child safety seat 1 comprises a head section 3, a back section 4 and a sitting section 5. However, it should be understood that the child safety seat 1 according to the present invention also can be used in a rearward-facing position (not shown).

The head section 3 and back section 4 of the child safety seat 1 are provided with protective wings 34. The protective wings 34 will prevent a part of the child, for instance the head of the child, from rolling out of the child safety seat 1 during a collision. The protective wings 34 are over at least a part of their surface padded with energy absorbing material (not shown).

The child is secured into the child safety seat 1 by use of a vehicle seat belt (not shown).

The seat assembly 2 is provided with two anchorage points 6 (see also figure 2), where the anchorage points 6 are used to connect with Isofix 8 connectors.

A base frame 7 is then equipped with two Isofix connectors 8, such that the base frame 7 through the anchorage points 6 and Isofix connectors 8 are secured into the seat assembly 2 of the vehicle. As both the anchorage points 6 and Isofix connectors 8 are of a standard design known to a person skilled in the art, these elements will not be discussed further here.

In the shown embodiment the base frame 7 is a triangular solid plate, but can also be manufactured as an open framework, where three bars are connected to form the triangular shape of the base frame 7. A part of the base frame 7 that is to be arranged adjacent the anchorage points 6 in the seat assembly 2, is then provided with the Isofix connectors 8.

The sitting section 5 of the child safety seat 1 and the frame 7 are connected through a pivot connection 9, where the pivot connection 9 is arranged at a front part of the sitting section 5 and base frame 7. The pivot connection 9 will provide a connection between the sitting section 5 and the base frame 7 such that the sitting section 5 and the base frame 7 are prevented from becoming separated from each other. Furthermore, the pivot connection 9 will provide a fixed connection between the sitting section 5 and the base frame 7 under normal utilization of the child safety seat, such that the sitting section 5 cannot be rotated relative to the base frame 7.

In order to show the behavior of the child safety seat 1 during a side collision, the child safety seat 1 is shown from above in figure 2. The left side of figure 2 shows the child safety seat 1 according to the present invention in a normal situation, where it can be seen that the child safety seat 1 through the Isofix connectors 8 of the base frame 7 is connected to the seat assembly 2 of the vehicle. A side panel 10 (for instance a door) of the vehicle is schematically indicated.

When the vehicle, in which the child safety seat 1 according to the present invention is arranged, is involved in a collision from side, indicated with the arrow on the right side of figure 2, the pivot connection 9 will allow the head section 3, back section 4 and sitting section 5 to rotate relatively to the base frame 7, as the base frame 7 due to the Isofix connectors 8 and the anchorage points 6 is prevented from following the rotation. The rotation will be made about a pivot axis R, which pivot axis R extends in the longitudinal direction of the pivot connection 9. The head section 3, back section 4 and sitting section 5 will therefore rotate sideways about the pivot axis R towards the side panel 10.

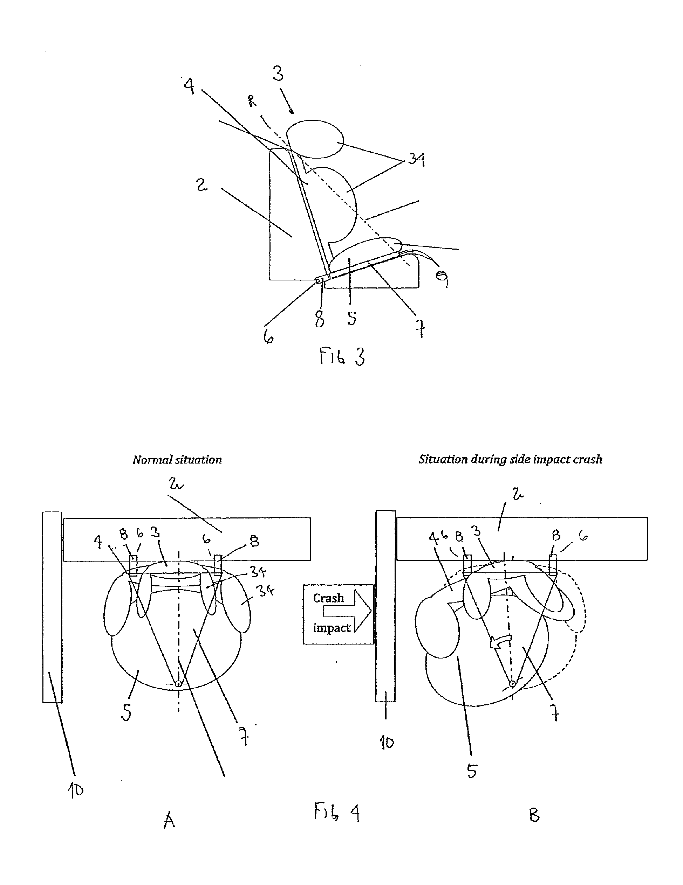

An alternative embodiment of the child safety seat according to the present invention is shown in figures 3 and 4, where the child safety seat 1 also comprises a head section 3, a back section 4 and sitting section 5. The head and back section 3, 4 are provided with protective wings 34, where at least a part of the surface of the protective wings 34 is provided with an energy absorbing material.

The seat assembly 2 is provided with two anchorage points 6, where the anchorage points 6 are used to connect with Isofix 8 connectors.

The base frame 7 comprises two Isofix connectors 8, whereby the base frame 7 can be secured to the seat assembly 2 of the vehicle through the anchorage points 6.

The base frame 7 and the sitting section 5 are connected to each other through the pivot connection 9, where the pivot connection 9 is arranged in a part of the sitting section 5 and base frame 7. The pivot connection 9 will provide a connection between the sitting section 5 and the base frame 7 such that the sitting section 5 and the base frame 7 are prevented from being separated from each other. Furthermore, the pivot connection 9 will provide a fixed connection between the sitting section 5 and the base frame 7 under normal utilization of the child safety seat, such that the sitting section 5 cannot be rotated relative to the base frame 7.

Furthermore, the head section 3 is also connected to a back of the seat assembly 2, such that the head section 3 is restricted from rotation in the event of a collision.

When the vehicle is involved in a collision from side, indicated with the arrow on the right side of figure 4, the pivot connection 9 will allow the back section 4 and sitting section 5 to rotate relatively to the base frame 7 and the head section 3, as both the base frame 7 (due to the Isofix connectors 8 and the anchorage points 6) and the head section 3 (due to its connection to the back of the seat assembly 2) are prevented from following the rotation.

The invention has now been explained with different embodiments. Only elements related to the invention are described and a skilled person will understand that one may make several alterations and modifications to the described and shown embodiments that are within the scope of the invention as defined in the following claims.

## Claims

1. A child safety seat (1) for use in a vehicle, the child safety seat comprising at least a head section (3), a back section (4) and a sitting section (5), a base frame (7) having a lower surface resting on a sitting portion of a vehicle seat (2) and being connected to the child safety seat (1), the base frame (7) comprising Isofix connectors (8), the at least head section (3), back section (4) and sitting section (5) being rotatable relative the base frame (7), the base frame (7) is connected to the sitting section (5) of the child safety seat (1) through a pivot connection (9),
**characterized in that** the pivot connection (9) being arranged in a front part of the base frame (7) and the sitting section (5) of the child safety seat (1), the pivot connection (9) through means providing a fixed connection between the base frame (7) and the sitting section (5) under normal utilization of the child safety seat (1), but allowing at least the back section (4) and sitting section (5) to rotate sideways about an axis (R) extending through the pivot connection (9) in the event of a collision when a certain critical predetermined value is exceeded, the pivot connection (9) further comprising energy absorbing means.

2. A child safety seat according to claim 1,
**characterized in that** the head section (3) and back section (4) are provided with protective wings (34).

3. A child safety seat according to claim 2,
**characterized in that** the protective wings (34) over at least a part of their surface are padded with energy absorbing material.

4. A child safety seat according to claim 1,
**characterized in that** the pivot connection (9) is constituted of a bolt, screw or the like, the pivot connection (9) preventing the sitting section (5) from separating from the frame (7).

5. A child safety seat according to claim 4,
**characterized in that** the pivot connection (9) comprises at least one shear pin.

6. A child safety seat according to claim 1,
**characterized in that** the energy absorbing means is a spring element or the like.

7. A child safety seat according to claim 1,
**characterized in that** the head section (3) is connected to a vehicle seat (2) by a top tether.

8. A child safety seat according to claim 1,
**characterized in that** the base frame (7) is comprised of a plate element or a plurality of beams connected to each other.

## Patentansprüche

1. Kindersicherheitssitz (1) zur Verwendung in einem Fahrzeug, wobei der Kindersicherheitssitz umfasst:
wenigstens eine Kopfbereich (3), einen Rückbereich (4) und einen Sitzbereich (5), einen Grundrahmen (7) mit einer unteren Fläche, die auf einem Sitzabschnitt eines Fahrzeugsitzes (2) ruht und mit dem Kindersicherheitssitz (1) verbunden ist, wobei der Grundrahmen (7) Isofix-Verbindungen (8) umfasst, wobei der wenigstens eine Kopfbereich (3), der Rückbereich (4) und der Sitzbereich (5) relativ zu dem Grundrahmen (7) rotierbar sind, wobei der Grundrahmen (7) mit dem Sitzbereich (5) des Kindersicherheitssitzes (1) durch eine Schwenkverbindung (9) verbunden ist,
**dadurch gekennzeichnet, dass** die Schwenkverbindung (9) in einem Vorderteil des Grundrahmens (7) und des Sitzbereiches (5) des Kindersicherheitssitzes (1) angeordnet ist, wobei die Schwenkverbindung (9) bei normaler Benutzung des Kindersicherheitssitzes (1) durch Mittel eine feste Verbindung zwischen dem Grundrahmen (7) und dem Sitzbereich (5) bereitstellt, aber zumindest dem Rückbereich (4) und dem Sitzbereich (5), im Falle einer Kollision wenn ein gewisser kritischer vorbestimmter Wert überschritten wird, erlaubt seitlich um eine Achse (R) zu rotieren, die sich durch die Schwenkverbindung (9) erstreckt, wobei die Schwenkverbindung (9) weiterhin Energieabsorptionsmittel umfasst.

2. Kindersicherheitssitz gemäß Anspruch 1, **dadurch gekennzeichnet, dass** der Kopfbereich (3) und der Rückbereich (4) mit Schutzflügeln (34) ausgestattet sind.

3. Kindersicherheitssitz gemäß Anspruch 2, **dadurch gekennzeichnet, dass** die Schutzflügel (34) wenigstens über einen Teil ihrer Fläche mit Energie absorbierenden Material gepolstert sind.

4. Kindersicherheitssitz gemäß Anspruch 1, **dadurch gekennzeichnet, dass** die Schwenkverbindung (9) aus einem Bolzen, einer Schraube oder dergleichen besteht, wobei die Schwenkverbindung (9) verhindert, dass sich der Sitzbereich (5) vom Rahmen (7) trennt.

5. Kindersicherheitssitz gemäß Anspruch 4, **dadurch gekennzeichnet, dass** die Schwenkverbindung (9) wenigstens einen Scherstift umfasst.

6. Kindersicherheitssitz gemäß Anspruch 1, **dadurch gekennzeichnet, dass** das Energieabsorptionsmittel ein Federelement oder dergleichen ist.

7. Kindersicherheitssitz gemäß Anspruch 1, **dadurch gekennzeichnet, dass** der Kopfabschnitt (3) mit einem Fahrzeugsitz (2) durch einen oberen Haltegurt verbunden ist.

8. Kindersicherheitssitz gemäß Anspruch 1, **dadurch gekennzeichnet, dass** der Grundrahmen (7) ein Plattenelement oder eine Vielzahl von Trägern, die untereinander verbunden sind, umfasst.

## Revendications

1. Siège de sécurité pour enfant (1) destiné à être utilisé dans un véhicule, le siège de sécurité pour enfant comprenant au moins une section de tête (3), une section de dossier (4) et une section d'assise (5), un châssis de base (7) ayant une surface inférieure reposant sur une partie d'assise d'un siège de véhicule (2) et étant raccordé au siège de sécurité pour enfant (1), le châssis de base (7) comprenant des connecteurs Isofix (8), la au moins une section de tête (3), la section de dossier (4) et la section d'assise (5) pouvant tourner par rapport au châssis de base (7), le châssis de base (7) est raccordé à la section d'assise (5) du siège de sécurité pour enfant (1) par le biais d'un raccordement à pivot (9),
**caractérisé en ce que** le raccordement à pivot (9) est agencé dans une partie avant du châssis de base (7) et la section d'assise (5) du siège de sécurité pour enfant (1), le raccordement à pivot (9) par le biais de moyens fournissant un raccordement fixe entre le châssis de base (7) et la section d'assise (5) au cours de l'utilisation normale du siège de sécurité pour enfant (1), mais permettant au moins à la partie de dossier (4) et à la partie d'assise (5) de tourner obliquement autour d'un axe (R) s'étendant à travers le raccordement à pivot (9) en cas de collision lorsqu'une certaine valeur prédéterminée critique est dépassée, le raccordement à pivot (9) comprenant en outre des moyens d'amortissement.

2. Siège de sécurité pour enfant selon la revendication 1,
**caractérisé en ce que** la section de tête (3) et la section de dossier (4) sont prévues avec des ailes de protection (34).

3. Siège de sécurité pour enfant selon la revendication 2,
**caractérisé en ce que** les ailes de protection (34) sur au moins une partie de leur surface sont rembourrées avec un matériau d'amortissement.

4. Siège de sécurité pour enfant selon la revendication 1,
**caractérisé en ce que** le raccordement à pivot (9) est constitué d'un boulon, d'une vis ou similaire, le raccordement à pivot (9) empêchant la section d'assise (5) de se séparer du châssis (7).

5. Siège de sécurité pour enfant selon la revendication 4,
**caractérisé en ce que** le raccordement à pivot (9) comprend au moins une goupille de cisaillement.

6. Siège de sécurité pour enfant selon la revendication 1,
**caractérisé en ce que** les moyens d'amortissement sont un élément de ressort ou similaire.

7. Siège de sécurité pour enfant selon la revendication 1,
**caractérisé en ce que** la section de tête (3) est raccordée à un siège de véhicule (2) par une attache supérieure.

8. Siège de sécurité pour enfant selon la revendication 1,
**caractérisé en ce que** le châssis de base (7) est composé d'un élément de plaque ou d'une pluralité de poutres raccordées les unes aux autres.
